# EUROPÄISCHE PATENTSCHRIFT

(11) **EP 2 360 034 B1**
(45) Veröffentlichungstag und Bekanntmachung des Hinweises auf die Patenterteilung: **10.10.2012**
(21) Anmeldenummer: 10187080.6
(22) Anmeldetag: 11.10.2010
(51) Int. Cl.: B60C 11/11, B60C 11/13

(54) **Fahrzeugluftreifen**
Pneumatic tyres for a vehicle
Pneus de véhicule

(30) Priorität: 15.02.2010 DE 102010000414
(43) Veröffentlichungstag der Anmeldung: 24.08.2011
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- WO-A1-2009/043631
- US-A- 5 456 301
- US-A1- 2001 027 835

## Beschreibung

Die Erfindung betrifft einen Fahrzeugluftreifen mit einem Laufstreifen mit Profilelementen, beispielsweise Profilblöcken, mit zumindest einem einspringenden Eckbereich, welcher zwischen zwei einen im Wesentlichen rechten oder kleineren Winkel einschließenden Blockflanken gebildet ist, und wobei der einspringende Eckbereich durch ein im Eck positioniertes Stützelement stabilisiert ist. Ein solcher gattungsgemäßer Reifen ist aus der WO-2009/043631 bekannt.

Fahrzeugluftreifen mit Laufstreifen mit Profilblöcken, welche einspringende Eckbereiche aufweisen, sind in unterschiedlichen Ausführungsvarianten bekannt. Die US-B-6,571,843 offenbart beispielsweise einen Fahrzeugluftreifen mit Profilblöcken mit einspringenden Eckbereichen, die sich in der Umfangsrichtung des Laufstreifens öffnen.

Es ist ferner bekannt, die einspringenden Eckbereiche von Profilblöcken abgerundet auszuführen, sodass keine exakte in radialer Richtung verlaufende Kante zwischen den beiden, die Ecke bildenden Flankenflächen vorliegt. Durch diese Maßnahme soll der Blockeckbereich stabilisiert werden, um einem Ausbilden von Kerben und Einrissen in den einspringenden Ecken der Blöcke entgegenzuwirken. Es ist jedoch für manche Profileigenschaften, beispielsweise die Griffeigenschaften, von Vorteil, möglichst viele Kanten zur Verfügung zu haben und zu erhalten. Darüber hinaus schränkt es die Gestaltungsmöglichkeiten eines Laufstreifens ein, wenn Eckbereiche mit Rundungen versehen werden müssen.

Weiterhin ist aus der DE-A-10 2007 047 497 der Anmelderin, welche den nächstliegenden Stand der Technik darstellt, ein Fahrzeugluftreifen der eingangs genannten Art bekannt, bei dem einspringende Eckbereiche an Profilblöcken ohne Rundungen stabilisiert und dabei präzise verlaufende Kanten zumindest im Neuzustand des Reifens zur Verfügung gestellt sind. Dieses wird dadurch erreicht, indem der einspringende Eckbereich durch ein im Eck positioniertes Stützelement stabilisiert ist, welches eine in Richtung Blockoberfläche spitzer werdende Gestalt mit zumindest einer ebenen Übergangsfläche zwischen den Flankenflächen aufweist.

Es besteht jedoch weiterhin Bedarf, das vorgenannte Laufstreifenprofil vor Rissen und Einkerbungen zu schützen.

Der Erfindung liegt somit die Aufgabe zu Grunde, bei einem Fahrzeugluftreifen der eingangs genannten Art einspringende Eckbereiche an Profilblöcken ohne Rundungen zu stabilisieren, dabei präzise verlaufende Kanten zumindest im Neuzustand des Reifens zur Verfügung zu haben und gleichzeitig den Eckbereich vor Rissen und Einkerbungen zu schützen.

Die Aufgabe wird gelöst, indem an dem spitzer werdenden, der Profilblockoberftäche zugewandten Ende des Stützelements eine Aussparung angeordnet ist, welche derart gestaltet ist, dass in dem Eckbereich auftretende Spannungen verteilbar sind.

Durch diese Aussparung, welche radial außen an dem spitz zulaufenden Ende des Stützelementes angeordnet ist, ist zusätzlich zu der Stabilisierung durch das Stützelement eine Verteilung der in dem Betriebszustand des Fahrzeugluftreifens auftretenden Spannungen, vorzugsweise im Bereich der Profilblockoberfläche erreicht. Durch diese Spannungsverteilung kann wirkungsvoll Rissen und Kerbwirkungen an der Profiloberfläche entgegengewirkt werden.

Besonders vorteilhaft ist es, wenn die Aussparung anteilig in der Blockoberfläche und anteilig in den das Eck ausbildenden Rillenflanken angeordnet ist. Hierdurch ist eine besonders vorteilhafte Ausbildungsform zur Vermeidung von Spannungsrissen geschaffen.

Zweckmäßig ist es, wenn die Aussparung derart dimensioniert ist, dass die an der breitesten Stelle gegenüberliegenden, die Aussparung begrenzenden Kanten zwischen 1 - 4mm, vorzugsweise zwischen 2 - 3mm voneinander entfernt liegen. Eine kleinere Aussparung würde Spannungsrisse wieder zulassen, eine größere Aussparung würde zu viel von der Profilblockoberfläche wegnehmen, so dass die Kontaktfläche Reifen - Fahrbahn unvorteilhaft verringert wäre.

Die Aussparung erstreckt sich in radialer Richtung maximal 15% der radialen Ausgangsprofiltiefe, beginnend von der Profilblockoberfläche.

Besonders wirkungsvoll ist Kerbwirkungen oder Rissen entgegenzuwirken, wenn die Aussparung eine Kugelform, eine zylindrische Form, eine elliptische Form oder eine Freiform, vorzugsweise mit runden Geometrien aufweist. Hierdurch ist eine besonders gleichmäßige Spannungsverteilung ohne Spannungsspitzen erreicht.

Bei einer bevorzugten Ausführungsform der Erfindung weist das Stützelement eine pyramidenähnliche oder pyramidenstumpfähnliche Gestalt auf. Durch diese Form wird eine besonders vorteilhafte Stabilisierung der einspringenden Eckbereiche von Profilelementen erreicht. In diesem Zusammenhang ist es auch von Vorteil, wenn das Stützelement eine einzige, dreieckförmige oder trapezförmige Übergangsfläche zu den Flankenflächen aufweist. Diese Ausführungsform stellt besonders exakt verlaufende Kanten an der Laufstreifenoberfläche zur Verfügung.

Um die Profilelemente ausreichend zu stabilisieren, sollte die Übergangsfläche des Stützelementes mit der radialen Richtung einen Winkel in der Größenordnung von 15° bis 45° einschließen. Dabei ist es auch günstig, wenn das Stützelement, vom Nutgrund aus betrachtet, über mindestens zwei Drittel der radialen Erstreckung des Eckbereiches verläuft.

Sollte es sich als notwendig herausstellen, können die Übergänge zwischen dem Stützelement und den Flankenflächen verrundet werden. Diese lokalen Rundungen können derart klein dimensioniert sein, dass sie optisch kaum auffallen.

Weitere Merkmale, Vorteile und Einzelheiten der Erfindung werden nun anhand der Zeichnung, die schematisch mehrere Ausführungsbeispiele darstellt, näher beschrieben. Dabei zeigen die:
Fig. 1 eine Ansicht eines einspringenden Eckbereiches eines Profilblockes in einem Laufstreifen eines Fahrzeugluftreifens gemäß dem Stand der Technik;
Fig.2 eine Draufsicht auf zwei Profilblöcke in einem Laufstreifen eines Fahrzeugluftreifens;
Fig.3 eine Ansicht eines Ausschnittes eines Profilblockes der Fig.2;
Fig.4 bis Fig. 6 weitere Ausführungsvarianten der Erfindung anhand von Ansichten einspringender Ecken und Aussparungen eines Profilblockes.

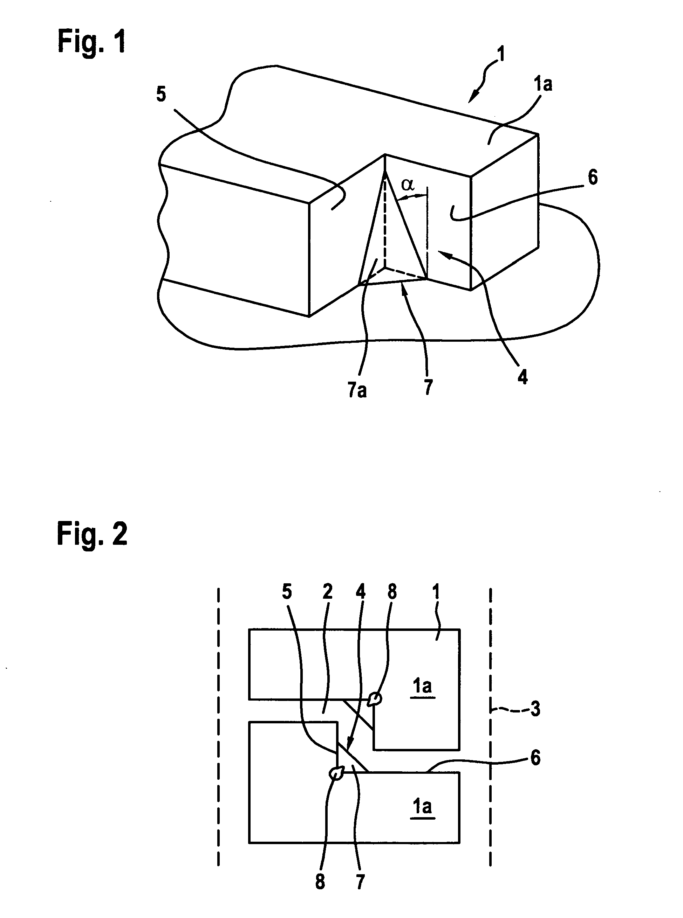

**Fig. 1** zeigt eine Ansicht des einspringenden Eckbereiches 4 eines Profilblockes 1 gemäß dem Stand der Technik, wobei mit 1a die Profilblockoberfläche und mit 1b der Nutgrund bezeichnet ist. Die beiden, den einspringenden Eckbereich bildenden Flankenflächen 5 und 6 verlaufen von der Blockoberfläche 1a ausgehend in radialer Richtung bzw. im Wesentlichen in radialer Richtung. In der Ecke zwischen den Flankenflächen 5, 6 ist ein Stützelement 7 positioniert, welches zwischen den Flankenflächen 5, 6 eine dreieckförmige Übergangsfläche 7a bildet, deren eine Seite dem Nutgrund zugeordnet ist und deren dieser Seite gegenüberliegende Dreieckspitze bis an oder bis nahezu an die Blockprofiloberfläche 1a reicht. Das Stützelement 7 weist in diesem Ausführungsbeispiel im Wesentlichen die Form einer dreiseitigen Pyramide auf, deren Grundfläche dem Nutgrund 1b zugeordnet ist und die mit zwei ihrer dreieckförmigen Mantelflächen an den Flankenflächen 5 und 6 anliegt. Die vom Stützelement 7 zu sehende dreieckförmige Übergangsfläche 7a verläuft unter einem Winkel α gegenüber der radialen Richtung, der größer ist als der Winkel, den die Flankenflächen 5 und 6 mit der radialen Richtung einschließen und zwischen 15° und 45° gewählt wird. Das Stützelement 7 bewirkt somit eine Stabilisierung des einspringenden Eckbereiches 4 und sorgt gleichzeitig dafür, dass zumindest im Neuzustand des Reifens der einspringende Eckbereich 4 in seiner ursprünglichen scharfkantigen Form vorliegt. Während des fortschreitenden Abriebes des Laufstreifens kommt von der Fläche 7a eine Kante zum Vorschein, die gemeinsam mit den Kanten der Flächen 5 und 6 präzise Ecken bildet.

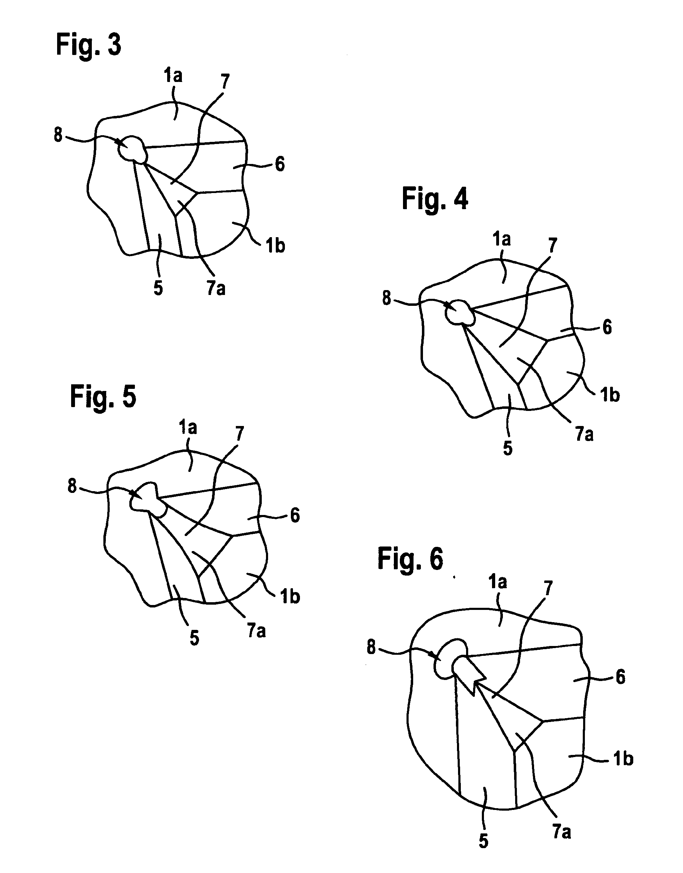

Die **Fig.2** zeigt eine Draufsicht auf zwei Profilblöcke 1, wie sie beispielsweise in einem Laufstreifen eines erfindungsgemäßen Fahrzeugluftreifens beliebiger Bauart und Ausführung vorgesehen sein können. Die **Fig.3** zeigt eine Ansicht auf einen Ausschnitt eines Profilblockes 1 der Fig.2. Die zwei Profilblöcke 1 sind entsprechend dem in Fig.1 gezeigten Block aufgebaut, weisen aber an dem spitzer werdenden, der Profilblockoberfläche 1a zugewandten Ende des Stützelements 7 eine Aussparung 8 auf, welche derart gestaltet ist, dass dort auftretende Spannungen verteilt und einer möglichen Rissbildung bzw. Kerbwirkung entgegengewirkt ist. Die Aussparung 8 hat die Form eines Kugelschnittes, reicht im Eckbereich von den radial äußeren Flankenabschnitten bis in die Profilblockoberfläche 1a hinein und weist auf der Blockoberfläche 1a die Form eines Teilkreises auf. Durch die Anordnung dieser Aussparung 8 werden Spannungen, die in dem Eckbereich 4 während des Fahrbetriebes auftreten können, verteilt, Spannungsspitzen sind vermieden so dass eine Rissbildung bzw. Kerbwirkung verhindert ist. Zwischen den beiden Profilblöcken 1 verläuft eine Nut 2. Die gestrichelten Linien in Fig.2 deuten ebenfalls Nuten 3 an, die beispielsweise in Umfangsrichtung des Reifens verlaufen. Die paarweise angeordneten Blöcke 1 können mit gleichartig ausgeführten Blöcken eine in Umfangsrichtung umlaufende Blockreihe bilden. Die beiden Profilblöcke 1 weisen bei dem gezeigten Ausführungsbeispiel eine L-Form mit zwei Blockabschnitten auf, die miteinander einen rechten Winkel einschließen. Zwischen den Flankenflächen 5 und 6 der beiden Abschnitte ist ein einspringender Eckbereich 4 gebildet. Bei Profilen aus dem Stand der Technik werden derartige Eckbereiche üblicherweise stark verrundet ausgeführt, um im Betrieb des Reifens das Entstehen von Rissen und Kerben zu vermeiden.

Gemäß der Erfindung wird eine präzise und scharfkantige Ausführung der einspringenden Eckbereiche 4 ermöglicht und gleichzeitig ein Stabilisierungseffekt erzielt, sodass auf ein Abrunden verzichtet werden kann.

Bei der in **Fig. 4** gezeigten Ausführungsvariante weist das Stützelement 7 annähernd die Gestalt einer abgestumpften, dreiseitigen Pyramide auf und reicht bis an die Profilblockoberfläche 1a. Die Aussparung 8 ist derart angeordnet, dass diese im radial äußeren Bereich des Stützelementes 7 und auf der Profilblockoberfläche 1a angeordnet ist und die Form eines Kugelabschnittes aufweist. Die Aussparung weist einen Abstand von 2,5mm zwischen zwei gegenüberliegenden, die Aussparung begrenzenden Kanten auf. Die Übergangsfläche 7a ist im Wesentlichen trapezförmig.

Bei der in **Fig.5** gezeigten Ausführungsvariante ist das Stützelement 7 ähnlich zu Fig.4 annähernd in der Gestalt einer abgestumpften, dreiseitigen Pyramide ausgeführt, während jedoch die Übergangsfläche 7a konkav in Richtung Profilblockelement 1 gewölbt ist. Die Aussparung 8 weist die Form einer Freiform auf. Wesentlich bei der Formgebung der Aussparung ist, dass vorrangig runde Formen zur gleichmäßigen Spannungsverteilung Verwendung finden.

Bei der **in** **Fig.6** gezeigten Ausführungsvariante ist die Übergangsfläche 7a ähnlich zu Fig.3 dreieckförmig ausgeführt. Die Aussparung 8 weist eine zylindrische Form auf.

### Bezugszeichenliste

- 1: Profilblock
- 1a: Oberfläche
- 1b: Nutgrund
- 2: Nut
- 3: Nut
- 4: einspringender Eckbereich
- 5: Flanke
- 6: Flanke
- 7: Stützelement
- 7a: Übergangsfläche
- 7': Stützelement
- 7'a: Übergangsfläche
- 7": Stützelement
- 7"a: Übergangsfläche
- 8: Aussparung

## Patentansprüche

1. Fahrzeugluftreifen mit einem Laufstreifen mit Profilblöcken (1) mit zumindest einem einspringenden Eckbereich (4), welcher zwischen zwei einen im Wesentlichen rechten oder kleineren Winkel einschließenden Blockflanken (5, 6) gebildet ist, wobei der einspringende Eckbereich (4) durch ein im Eck positioniertes Stützelement (7) stabilisiert ist, welches eine in Richtung Blockoberfläche spitzer werdende Gestalt mit zumindest einer ebenen Übergangsfläche (7a) zwischen den Flankenflächen (5, 6) aufweist, **dadurch gekennzeichnet, dass**
an dem spitzer werdenden, der Profilblockoberfläche (1a) zugewandten Ende des Stützelements (7) eine Aussparung (8) angeordnet ist, welche derart gestaltet ist, dass im Betriebszustand auftretende Spannungen verteilbar sind.

2. Fahrzeugluftreifen nach Anspruch 1, **dadurch gekennzeichnet, dass** die Aussparung (8) zumindest anteilig in der Blockoberfläche angeordnet ist.

3. Fahrzeugluftreifen nach Anspruch 1 oder 2, **dadurch gekennzeichnet, dass** die Aussparung (8) derart dimensioniert ist, dass die an der breitesten Stelle gegenüberliegenden, die Aussparung (8) begrenzenden Kanten zwischen 1 - 4mm, vorzugsweise zwischen 2 - 3mm voneinander entfernt liegen.

4. Fahrzeugluftreifen nach einem oder mehreren der vorangehenden Ansprüche, **dadurch gekennzeichnet, dass** die Aussparung (8) eine Kugelform, eine zylindrische Form, eine elliptische Form oder eine Freiform aufweist.

5. Fahrzeugluftreifen nach einem oder mehreren der vorangehenden Ansprüche, **dadurch gekennzeichnet, dass** das Stützelement (7) eine pyramidenähnliche oder pyramidenstumpfähnliche Gestalt aufweist.

6. Fahrzeugluftreifen nach einem oder mehreren der vorangehenden Ansprüche, **dadurch gekennzeichnet, dass** das Stützelement (7) eine einzige, dreieckförmige oder trapezförmige Übergangsfläche (7a) zu den Flankenflächen (5, 6) aufweist.

7. Fahrzeugluftreifen nach einem oder mehreren der vorangehenden Ansprüche, **dadurch gekennzeichnet, dass** die Übergangsfläche(n) einen Winkel (α) von 15° bis 45° mit der radialen Richtung einschließt bzw. einschließen.

8. Fahrzeugluftreifen nach einem oder mehreren der vorangehenden Ansprüche, **dadurch gekennzeichnet, dass** die Übergangsfläche (7a) konkav, also in den Profilblock hinein gewölbt, ausgebildet ist.

9. Fahrzeugluftreifen nach einem der vorangehenden Ansprüche, **dadurch gekennzeichnet, dass** das Stützelement (7) vom Nutgrund aus betrachtet, über mindestens zwei Drittel der radialen Erstreckung des Eckbereiches (4) verläuft.

10. Fahrzeugluftreifen nach einem der vorangehenden Ansprüche, **dadurch gekennzeichnet, dass** die Übergänge zwischen dem Stützelement (7) und den Flankenflächen (5, 6) verrundet sind.

## Claims

1. Pneumatic vehicle tyre having a tread with profile blocks (1) with at least one recessed corner region (4) formed between two block flanks (5, 6) which enclose a substantially right angle or a smaller angle, wherein the recessed corner region (4) is stabilized by a support element (7) which is positioned in the corner and which has a form which tapers in the direction of the block surface and which has at least one planar transition surface (7a) between the flank surfaces (5, 6), **characterized in that**,
at the tapering end, which points towards the profile block surface (1a), of the support element (7), there is arranged a cutout (8) designed such that stresses arising in the operating state can be distributed.

2. Pneumatic vehicle tyre according to Claim 1, **characterized in that** the cutout (8) is arranged at least partially in the block surface.

3. Pneumatic vehicle tyre according to Claim 1 or 2, **characterized in that** the cutout (8) is dimensioned such that those edges which delimit the cutout (8) which are situated opposite one another at the widest point are at a distance of between 1 - 4 mm, preferably between 2 - 3 mm, from one another.

4. Pneumatic vehicle tyre according to one or more of the preceding claims, **characterized in that** the cutout (8) has a spherical form, a cylindrical form, an elliptical form or a free form.

5. Pneumatic vehicle tyre according to one or more of the preceding claims, **characterized in that** the support element (7) is formed in the shape of a pyramid or in the shape of a truncated pyramid.

6. Pneumatic vehicle tyre according to one or more of the preceding claims, **characterized in that** the support element (7) has a single triangular or trapezoidal transition surface (7a) to the flank surfaces (5, 6).

7. Pneumatic vehicle tyre according to one or more of the preceding claims, **characterized in that** the transition surface(s) encloses or enclose an angle (α) of 15° to 45° with the radial direction.

8. Pneumatic vehicle tyre according to one or more of the preceding claims, **characterized in that** the transition surface (7a) is of concave form, that is to say is of dished form, into the profile block.

9. Pneumatic vehicle tyre according to one of the preceding claims, **characterized in that**, as viewed from the groove base, the support element (7) runs over at least two thirds of the radial extent of the corner region (4).

10. Pneumatic vehicle tyre according to one of the preceding claims, **characterized in that** the transitions between the support element (7) and the flank surfaces (5, 6) are rounded.

## Revendications

1. Bandage pneumatique pour roue de véhicule, présentant une bande de roulement dotée de blocs profilés (1) qui présentent au moins une partie de coin (4) en retrait formée entre deux flancs (5, 6) de bloc qui forment entre eux un angle essentiellement droit ou un angle plus petit,
la partie de coin (4) en retrait étant stabilisée par un élément de soutien (7) disposé au coin et dont la forme s'amincit en direction de la surface du bloc, avec au moins une surface de transition (7a) plane entre les deux surfaces de flanc (5, 6),
**caractérisé en ce que**
une découpe (8) configurée de telle sorte que les contraintes qui surviennent en fonctionnement soient réparties est prévue à l'extrémité de l'élément de soutien (7) qui s'amincit et qui est tourné vers la surface (1a) du bloc profilé.

2. Bandage pneumatique pour roue de véhicule selon la revendication 1, **caractérisé en ce que** la découpe (8) est disposée au moins en partie dans la surface du bloc.

3. Bandage pneumatique pour roue de véhicule selon les revendications 1 ou 2, **caractérisé en ce que** la découpe (8) est dimensionnée de telle sorte que les arêtes opposées qui délimitent la découpe (8) à l'emplacement le plus large sont éloignées l'une de l'autre de 1 à 4 mm et de préférence de 2 à 3 mm.

4. Bandage pneumatique pour roue de véhicule selon l'une ou plusieurs des revendications précédentes, **caractérisé en ce que** la découpe (8) présente la forme d'une sphère, la forme d'un cylindre, la forme d'une ellipse ou une forme libre.

5. Bandage pneumatique pour roue de véhicule selon l'une ou plusieurs des revendications précédentes, **caractérisé en ce que** l'élément de soutien (7) présente une forme de type en pyramide ou en tronc de pyramide.

6. Bandage pneumatique pour roue de véhicule selon l'une ou plusieurs des revendications précédentes, **caractérisé en ce que** l'élément de soutien (7) présente une unique surface de transition (7a) vers les surfaces de flanc (5, 6), de forme triangulaire ou de forme trapézoïdale.

7. Bandage pneumatique pour roue de véhicule selon l'une ou plusieurs des revendications précédentes, **caractérisé en ce que** la ou les surfaces de transition forment avec la direction radiale un angle (α) compris entre 15° et 45°.

8. Bandage pneumatique pour roue de véhicule selon l'une ou plusieurs des revendications précédentes, **caractérisé en ce que** la surface de transition (7a) est concave et donc bombée en direction de l'intérieur du bloc profilé.

9. Bandage pneumatique pour roue de véhicule selon l'une ou plusieurs des revendications précédentes, **caractérisé en ce que** l'élément de soutien (7) vu depuis le fond de la rainure s'étend sur au moins deux tiers de l'extension radiale de la partie de coin (4).

10. Bandage pneumatique pour roue de véhicule selon l'une ou plusieurs des revendications précédentes, **caractérisé en ce que** les transitions entre l'élément de soutien (7) et les surfaces de flanc (5, 6) sont arrondies.
